# EUROPEAN PATENT APPLICATION

(11) **EP 0 947 285 A1**
(43) Date of publication of application: **06.10.1999**
(21) Application number: 98400757.5
(22) Date of filing: 31.03.1998
(51) Int. Cl.: B23P 15/00, F01P 3/08

(54) **Automotive engine fluid spray tube apparatus and method for making same**

(71) Applicant: Senior Engineering Investments AG, 8200 Schaffhausen (CH)
(72) Inventor: Foucault, Joel, 41000 Blois (FR)
(74) Representative: Pochart, François

(57) **Abstract**

An automotive engine fluid spray tube apparatus (50) and method for making same in which a fluid receiving aperture (60), valve chamber (64), fluid conduit member (80) and fluid release aperture (110) are all formed from a single, substantially continuous, sealed monolithic tube. In addition, an attachment member including a beaded flange and faceted region are formed of the same monolithic tube. A separate clamp member (95) having a faceted aperture equivalent to the faceted region of the tube and also having a beaded flange cavity substantially equivalent to the beaded flange of the tube telescopically receives the tube in an interference fit to attach the clamp member to the tube housing.

## Description

### BACKGROUND OF THE INVENTION

### 1. The Technical Field

The present invention relates to fluid spray tubes in general, and, more particularly, to an automotive engine spray tube apparatus, for use, by way of example, for directing oil from an oil sump, to be sprayed on the underside of a piston to cool same. Such an oil spray jet cooling tube is configured for one-way flow of an engine fluid under pressure and a method of making them.

### 2. The Prior Art

Automotive engine fluid spray tube apparatus and methods for making them have long been known in the art. Such fluid spray tube apparatus typically direct oil, or another fluid, such as a coolant, under pressure towards a surface and have a valve for controlling the flow of the fluid through the tube in the desired direction. Support clamps or brackets may also be provided to secure the spray tube apparatus to a sump or other source of the fluid, or to the part towards which the fluid is to be directed. In the past, such spray tube apparatus have typically been constructed from a number of individual components. For example, a typical spray tube apparatus may comprise a housing, a fluid check valve body defining a fluid entry end and a valve chamber, a valve seal, a valve seat, a spring to bias the valve seal within the valve chamber, an outlet tube; and a clamp member.

As the number of individual components comprising such a spray tube apparatus increases, the number of failure modes increases. Thus each joining of components through which the fluid passes provides an opportunity for premature leakage. Moreover, as the number of components increases so does the manufacturing complexity and cost. Accordingly, it would be desirable to provide such a spray tube apparatus which is comprised of as few individual components as possible and to minimize the number of joints through which the fluid passes. It would also be desirable to provide a method of manufacturing such a spray tube apparatus which permits the use of a minimum number of individual components and which minimizes the complexity of the manufacturing operation.

These and other objects of the invention will become apparent in view of the present specification, claims and drawings.

### SUMMARY OF THE INVENTION

The present invention is directed to an automotive engine fluid spray tube apparatus for transferring engine fluids, from a fluid source to a fluid release location, the fluid spray tube apparatus comprises a fluid spray tube apparatus housing describing a first, proximal fluid entry end and a second, distal fluid release end substantially opposite the first, fluid entry end, with a fluid receiving aperture at the proximal end of the apparatus for sealable attachment to, and receipt of the fluid from the fluid source. A valve chamber is operably positioned within the apparatus housing, the valve chamber including a fluid seal and a basing member operably bearing against the fluid seal for controlling the flow of the fluid in a direction extending from the first proximal end to the second distal end. A fluid conduit member is operably and sealably attached to one side of the valve chamber for directing the flow of the fluid from the first fluid entry end to the second, distal fluid release end. There is a fluid release aperture at the distal end of the apparatus for the positioned release of the fluid from the apparatus. Each of the fluid spray tube apparatus housing, fluid receiving aperture, valve chamber, fluid conduit member and fluid release aperture are operably and collectively integrated into a single, substantially continuous, sealed monolithic tube structure to promote the continuous flow of the fluid conducted therewithin, while precluding the inadvertent, premature leakage of the fluid from the structure.

The fluid spray tube apparatus further includes an attachment member positioned about the fluid spray tube apparatus housing for restrainably positioning the apparatus in position between the fluid source and the fluid release location. The attachment member comprises a faceted region positioned about at least a portion of the fluid spray tube apparatus housing, and further includes a clamp member possessing an equivalently faceted aperture for fixed telescopic receipt of the faceted portion of the apparatus housing by the faceted aperture of the clamp member.

The attachment member further includes an integrated beaded flange operably positioned into the circumference of the apparatus housing, substantially adjacent the faceted region. The clamp member further including a beaded flange cavity having a shape equivalent to that of the beaded flange for telescopic restrainable receipt of the beaded flange by the cavity. The beaded flange and the faceted attachment member serving to restrainably affix the orientation of the tube apparatus relative to the clamp member. The clamp member further including clamp attachment structure for securing both the clamp member and the fluid spray tube apparatus in a fixed desired position relative to both the fluid source and the fluid release locations.

At least one angled curve is positioned along the length of the fluid spray tube apparatus housing. The cross-sectional thickness of the fluid spray tube apparatus is enhanced to accommodate the at least one angled curve.

The valve chamber is located between two successive crimp regions within the fluid spray tube apparatus housing. One side of the fluid seal cooperates with one of the successive crimp regions to seal the apparatus against the flow of fluid back through the fluid entry end. The fluid biasing member cooperates with the other side of the fluid seal and the second of the successive crimp regions to bear against the fluid seal to in turn ensure against inadvertent misdirectional fluid flow. The fluid seal comprises a substantially spherical ball. The basing member comprises a substantially coiled spring member. Each of the fluid seal and basing member being positioned between the two successive crimp regions in the fluid spray tube apparatus.

A first portion of the interior of the fluid spray tube apparatus is configured with the diameter substantially different from the diameter of a second portion immediately adjacent same, so as to affect, as desired, the flow of the fluid therethrough the fluid spray tube apparatus. The first portion of the fluid spray tube apparatus is substantially larger in diameter than the diameter of the second portion. Alternatively, the second portion of the fluid spray tube apparatus is substantially larger in diameter than the diameter of the first portion.

The single, substantially continuous sealed monolithic tube structure is formed of a metallic material and is substantially cylindrical in shape.

The present invention is also directed to a process for manufacturing such an automotive engine fluid spray tube apparatus for transferring engine fluids under pressure from a fluid source to a fluid release location. The process comprises the steps of providing a single, substantially continuous sealed monolithic tube structure having a first, proximal fluid entry end and a second, distal fluid release end substantially opposite the first, fluid entry end. Forming a first crimp region in the tube structure at a position between the entry end and the release end. Positioning at least one of a fluid seal and a biasing member in an operable position substantially adjacent to the first crimp region on a first side. Forming a second crimp region in the tube structure substantially adjacent and on a second, opposite side of at least one of the fluid seal and biasing member, to create a valve chamber region operably occupied by the fluid seal and biasing member in positions restrained between the first and second crimp regions. The fluid seal comprises a substantially spherical ball bearing against the first crimp region. The biasing member comprising a compressible coil spring bearing against the spherical ball on one side of the spring, and bearing against the second crimp region on the second, opposite side of the spring.

The process for manufacturing such an engine fluid spray tube apparatus, for transferring a fluid from the fluid source to a fluid release location further comprises the step of outwardly flaring the tube structure substantially adjacent the second crimp region at a position downstream from the valve chamber. In one such embodiment, the process for manufacturing an engine fluid spray tube apparatus for transferring a fluid from the fluid source to a fluid release location further comprises the step of beading the tube structure substantially adjacent the second crimp region, at a position downstream from the valve chamber, to form an annular flange about the tube structure.

In a preferred embodiment, the process comprises the further step of faceting the tube structure immediately adjacent the beaded, flanged region downstream of the valve chamber, to enable cooperative receipt of both the beaded, flanged region and the faceted region in restrained fashion by a clamp member. The faceted region is then shaped to assume a substantially hexagonal surface about the tube structure. Through such a process the tube structure may be restrainably affixed to the clamp member, at the beaded, flanged region and the faceted region.

The process for manufacturing an engine fluid spray tube apparatus for transferring a fluid from the fluid source to a fluid release location further comprises the step of enlarging the internal diameter of the tube structure downstream of the valve chamber, towards the release end. Likewise, the process may further comprise the step of reducing the internal diameter of the tube structure at the release end of the apparatus.

In one preferred embodiment, the process for manufacturing an automotive engine fluid spray tube apparatus for transferring a fluid from the fluid source to a fluid release location particularly comprises the step of positioning the valve chamber substantially proximate to the first, proximal fluid entry end.

### BRIEF DESCRIPTION OF THE DRAWINGS

Fig. 1 is a perspective view of a prior art automotive engine fluid spray tube apparatus.
Fig. 2 is a sectional side elevation view of the prior art spray tube apparatus shown in Fig. 1, taken generally along line 2-2 of Fig. 1.
Fig. 3a is a sectional side elevation view of a monolithic, open-ended tube having a substantially uniform diameter and cross-section.
Fig. 3b is a sectional side elevation view of the monolithic, open-ended tube with a first, proximal fluid entry end, a valve seat crimp and a valve chamber formed proximate one end of the tube.
Fig. 3c is a sectional side elevation view of the monolithic, open-ended tube with the first, proximal fluid entry end, the valve seat crimp and the valve chamber formed proximate one end of the tube and with the one end trimmed to a predetermined length.
Fig. 3d is a sectional side elevation view of the monolithic, open-ended tube with the first, proximal fluid entry end, the valve seat crimp, and the valve chamber formed proximate one end of the tube and a valve seal ball inserted into the valve chamber adjacent the valve seat.
Fig. 3e is a sectional side elevation view of the monolithic, open-ended tube with the first, proximal fluid entry end, the valve seat crimp, and the valve chamber formed proximate one end of the tube and the valve seal ball and a helical spring valve biasing member inserted into the valve chamber with one end of the spring adjacent the valve seal ball.
Fig. 3f is a sectional side elevation view of the monolithic, open-ended tube with the first, proximal fluid entry end, the valve seat crimp, and the valve chamber proximate one end of the tube, the ball and the spring inserted into the valve chamber, and a portion of the tube proximate the other, opposite end of the spring crimped to capture the ball and the spring within the valve chamber.
Fig. 3g is a sectional side elevation view of the monolithic, open-ended tube with the first, proximal fluid entry end, the valve seat crimp, and the valve chamber formed proximate one end of the tube, the ball and the spring inserted into the valve chamber, and the portion of the tube proximate the free end of the spring crimped to capture the ball and the spring; and having a fluid conduit member and an attachment member partially formed distal from the valve chamber.
Fig. 3h is a sectional side elevation view of the monolithic, open-ended tube with the first, proximal fluid entry end, the valve seat crimp and the valve chamber formed proximate one end, the ball and the spring inserted into the valve chamber, the portion of the tube proximate the free end of the spring crimped to capture the ball and the spring, and having the fluid conduit member and the attachment member further partially formed distal from the valve chamber.

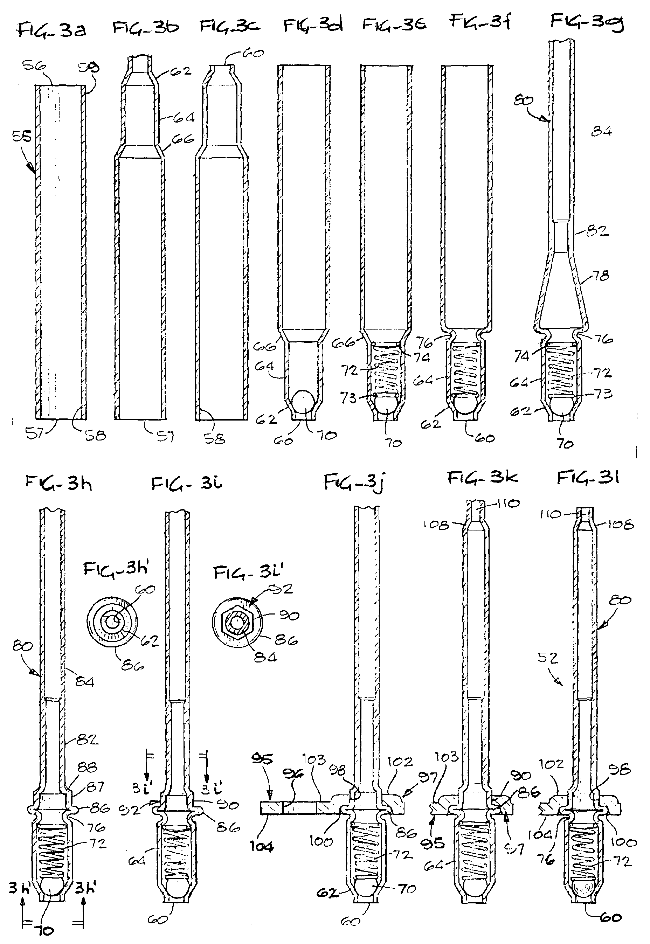

Fig. 3h' is a top plan view of the monolithic, open-ended tube having the first, proximal fluid entry end, the valve seat crimp and the valve chamber formed proximate one end of the tube and the fluid conduit member and the attachment member partially formed distal from the valve chamber, taken generally about line 3h'-3h' of Fig. 3h.
Fig. 3i is a sectional side elevation view of the monolithic, open-ended tube with the first, proximal fluid entry end, the valve seat crimp and the valve chamber formed proximate one end of the tube, the ball and the spring inserted into the valve chamber, and the portion of the tube proximate the free end of the spring crimped to capture the ball and the spring; and having the fluid conduit member and the attachment member still further partially formed distal from the valve chamber.
Fig. 3i' is a top plan view of the monolithic, open-ended tube having the first, proximal fluid entry end, the valve seat crimp and the valve chamber formed proximate one end of the tube and the fluid conduit member and the attachment member formed distal from the valve chamber, taken generally about line 3h'-3h' of Fig. 3h.
Fig. 3j is a sectional side elevation view of the monolithic, open-ended tube with the first, proximal fluid entry end, the valve seat crimp and the valve chamber formed proximate one end of the tube, the ball and the spring inserted into the valve chamber, and the portion of the tube proximate the free end of the spring crimped to capture the ball and the spring; the fluid conduit member and the attachment member partially formed distal from the valve chamber; and having a clamp member attached to the tube.
Fig. 3k is a sectional side elevation view of the monolithic, open-ended tube with the first, proximal fluid entry end, the valve seat crimp and the valve chamber formed proximate one end of the tube, the ball and the spring inserted into the valve chamber, and the portion of the tube proximate the free end of the spring crimped to capture the ball and the spring; the fluid conduit member and the attachment member formed distal from the valve chamber, the clamp member attached to the tube, and a fluid release aperture formed at the second, distal fluid release end of the tube.
Fig. 3l is a sectional side elevation view of the monolithic, open-ended tube with the first, proximal fluid entry end, the valve seat crimp and the valve chamber formed proximate one end of the tube, the ball and the spring inserted into the valve chamber, and the portion of the tube proximate the free end of the spring crimped to capture the ball and the spring; the fluid conduit member and the attachment member formed distal from the valve chamber, the clamp member attached to the tube, the fluid release aperture formed at the second, distal fluid release end of the tube; and having the second, distal fluid release end of the tube trimmed.
Fig. 4 is a perspective view of the automotive engine fluid spray tube apparatus according to an embodiment of the invention, with angled curves formed in the monolithic tube.

### DETAILED DESCRIPTION OF THE DRAWINGS

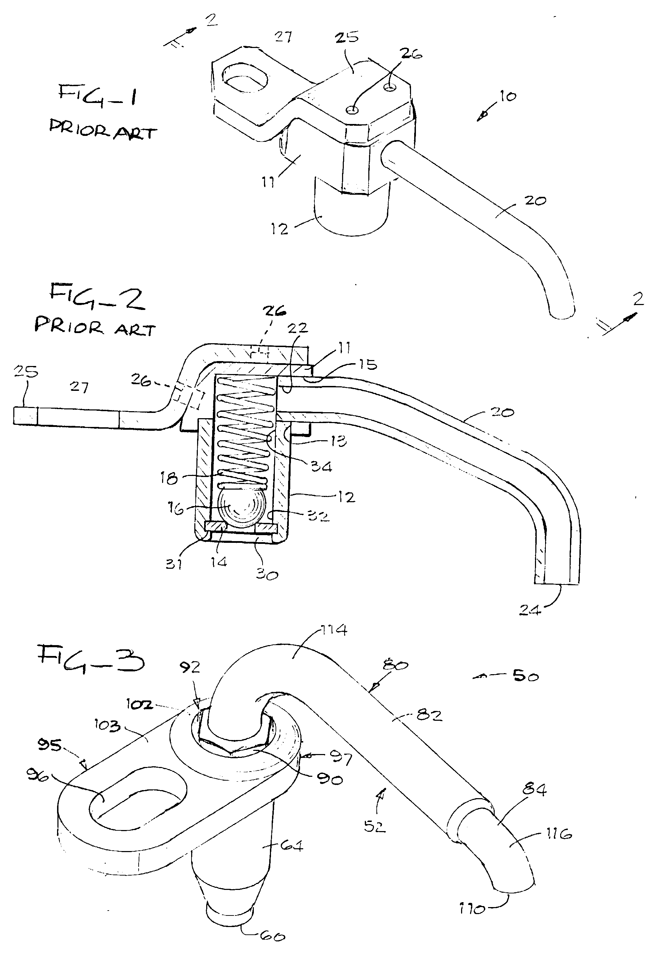

Figs. 1 and 2 illustrate prior art automotive engine fluid spray tube apparatus 10, which comprises a housing 11, a fluid entry and valve body chamber body 12, a fluid conduit tube 20, a valve seat 14, a valve seal or ball 16, a valve spring 18, and a clamp member 25 with an attachment aperture 27. Housing 11 receives and operably connects fluid inlet and valve chamber body 12 and fluid conduit tube 20 in fluid communication. Fluid entry and valve chamber body 12 comprises a fluid receiving aperture 30, a valve chamber 32, and an open outlet end 34. Fluid conduit tube 20 is comprised of an open-ended tube having inlet aperture 22 and a fluid release aperture 24.

Housing 11 is fabricated by machining from a block of metal or other suitable material to form a seat 13 for receiving outlet end 34 of body 12, as well as to form an opening 15 for receiving the end of tube 20 containing inlet aperture 22. Body 12 may be similarly machined to form at least an annular recess 31 to receive valve seat 14. After valve seat 14 is force fitted into recess 31, valve seal or ball 16 is inserted and then spring 18 may then be inserted into valve chamber 32 of body 12.

Open outlet end 34 of body 12 is inserted into seat 13 of housing 11. Body 12 may be forced into friction engagement with housing 11, more particularly seat 13, to achieve an interference fit or it may be integrally joined in fluid communication by means of a suitable soldering or welding technique.

Fluid conduit tube 20, which may comprise a metal tube, for example, is formed into a predetermined configuration, and then joined to housing 11 by inserting the end having inlet aperture 22 into mating engagement opening 15 in housing 11. Fluid conduit tube 20 may be frictionally inserted into housing 11 to achieve an interference fit, or it may be integrally joined in fluid communication by means of a suitable soldering or welding technique, or some combination of the two methods may be used. Thus, fluid receiving aperture 30 of body 12 is in fluid communication with fluid release aperture 24 of tube 20 through the two joints with housing 11.

In the prior art fluid spray tube apparatus 10 shown in Figs. 1 and 2, clamp member 25 is formed to complement at least a portion of a surface of housing 11. Clamp member 25 is then joined to housing 11 by placing the support plate into abutting relationship with the portion of the outer surface of the housing and joining the two components using a plurality of metal stakings 26 or by spot welds.

Figs. 3a through e and 4 illustrate an embodiment of an automotive engine fluid spray tube apparatus 50 according to the present invention, for transferring a fluid, from a fluid source, such as an oil sump (not shown) to a fluid release location, such as the underside of the bottom of an engine's piston skirts (not shown). The components comprising fluid spray tube apparatus 50 are monolithic fluid spray tube housing 55, valve seal ball 70, valve spring biasing member 72 and clamp member 92.

Figs. 3a through 31 illustrate steps in a process for forming fluid spray tube housing 52 of fluid spray tube apparatus 50 from a single, substantially continuous, sealed monolithic tube member 55 according to the present invention. The process starts with a monolithic, hollow, tube member 55 of desired, predetermined length having at least a first, proximal fluid entry end 56, an opposed second, distal fluid release end 57, an inside surface 58, an outside surface 59, a first, inside or internal, initial diameter, a first, outside or external, initial diameter, and a first, initial uniform wall thickness, as shown in Fig. 3a. Tube member 55 is of substantially uniform, predetermined cross-section throughout its length and may be made of any suitable material, with stainless steel being a preferred material.

A portion of tube member 55 adjacent first proximal end 56 is then specially formed, using drawing and forming techniques known in the art, to crimp the tube member at said first, proximal fluid entry end to form a fluid receiving aperture 60 having smaller inside and outside diameters than the first inside, and first outside, initial diameters. That same crimping operation radially compresses and axially expands tube member 55 to also form a first transitional, valve seal seat, region 62 having varying inside diameters increasing from the diameters of fluid receiving aperture 60, and a valve chamber 64 having an inside and outside diameters larger than the diameters of fluid receiving aperture 60 but smaller than initial inside and outside diameters, and a second transitional region having varying inside and outside diameters increasing from the diameters of chamber 64 to the initial inside and outside diameters of tube member 55.

Proximal fluid entry end 56, which was crimped to form fluid receiving aperture 60 in the previous step is then truncated to a desired, predetermined length, as illustrated in Fig 3c. Tube member 55 is then inverted and, as illustrated in Fig. 3d, a valve seal or spherical ball 70, having a larger diameter than the inside diameter of fluid receiving aperture 60, is inserted through the distal open second end 57 and transition region 66 into valve chamber 64 where it seats against the inside of transitional region or valve seal seat 62 on a first side.

Fig. 3e illustrates the insertion of a valve biasing member spring 72. One end 73 of spring 72 engages ball 70 while the other, opposite end 74 of spring 72 is disposed adjacent the end of valve chamber 64 opposite ball 70, that is at the smallest diameter of transitional portion 66. In the next step, as illustrated in Fig. 3f, transitional region 66 is again crimped adjacent, and on a second, opposite side of the ball and spring to form crimp 76. The diameter of crimp 76 is smaller than the diameter of valve chamber 64 so as to restrain and capture valve spring 72 such that it operably bears against fluid seal ball 70 to control the flow of fluid under pressure in the direction extending from the first, proximal end to the second distal end. At this point, valve chamber 64, operatively containing valve seal or ball 70 and biasing member spring 72 is completely formed to define a one-way valve permitting the entry of fluid under pressure through fluid inlet aperture 60 which pushes ball 70 away from aperture 60, against the bias of spring 72.

Fig. 3g illustrates an intermediate step in which a portion of tube member 55 adjacent crimp 76 is upset to form a truncated conical section 78 adjacent crimp 76, which has a wall thickness at least equal to or greater than the initial wall thickness of tube 55. This same step also begins to form fluid conduit member 80 comprising a first portion 82 having inside and outside diameters smaller than the inside and outside diameters of valve chamber 64 and a second portion 84 which further decreases in inside diameter from, while having substantially the same outside diameter as, portion 82. Portion 82 has substantially the same cross-sectional wall thickness of truncated conical section 78, portion 84 has a reduced cross-sectional thickness. Such a change in internal diameters will affect, as desired, the flow of the fluid, through fluid spray tube apparatus 50.

In the step illustrated in Fig. 3h, section 78 is further formed by axial and radial compression to bead an annular flange 86, immediately adjacent to crimp 76 and a cylindrical attachment region 87 on the other side of beaded flange 86 from crimp 76, at a position downstream from valve chamber 64. The remainder of section 78 is formed into the same inside and outside diameters, as well as cross-sectional thickness as portion 82 formed in the step illustrated in Fig.3g with a transitional fillet 88 between cylindrical attachment region 87 and portion 82 of fluid conduit member 80. The relationship of beaded flange 86, cylindrical attachment region 87, transitional fillet 88 and fluid conduit member 80 is further illustrated in Fig. 3h'.

In the next step, which is best illustrated in Figs. 3i and 3i', cylindrical attachment region 87 is further formed by radical compression dies into hexagonally faceted region 90 positioned about a portion of the spray tube apparatus housing. Together, beaded flange 86 and hexagonally faceted region 90 define part of an attachment member 92.

A conventional stamping operation (not shown) is used to form clamp member 95, which is perhaps best illustrated in Figs. 3j and 4. Clamp member 95 is stamped, preferably in a single stamping die, to form an attachment aperture 96 and a receiving segment 97 for fixedly receiving the spray tube apparatus housing. Segment 97 comprises a hexagonally faceted aperture 98 and a cylindrical cavity 100, with the centers of aperture 98 and cavity 100 being substantially coincident. In forming aperture 98 and cavity 100, a raised portion 102 is formed on the upper surface 103 of clamp member 95 in segment 97. Cavity 100 has a shape equivalent to beaded flange 86 and forms a recess on the underside 104 of clamp member 95 into which beaded flange 86 of the tube is telescopically restrainably received. Thus, beaded flange 86 may be nested within opening 100 such that only valve chamber 64 and fluid entry aperture 60 protrude down below the underside of clamp member 95. The size and shape of hexagonally faceted aperture 98, from flat to flat and point to point is slightly smaller than the size and shape of hexagonally faced region 90, from flat to flat and point to point. Thus, there is a frictional or interference fit between clamp member 95 and fluid spray tube apparatus housing 52 to create an attachment member 92 positioned about fluid spray tube housing 52. Fig 3j also illustrates the step of force fitting the mounting bracket onto the tube.

Fig. 3l illustrates the steps of crimping the distal end of tube 55 to form a transitional region 108 leading to a reduced diameter fluid release aperture 110 adjacent the second, distal fluid release end 56. Transitional region 108 has varying diameters decreasing from the diameters of portion 84 of fluid conduit member 80 down to the reduced internal and external diameters of fluid release aperture 110. In a step similar to that illustrated in Fig. 3b, the second, distal fluid release end 56 is trimmed to a predetermined length, as illustrated in Fig. 3l to form fluid spray tube housing 52.

A final processing step (not shown) forms one or more angled curves, such as angled curves 114 and 116 shown in Fig 4. Particularly, where an angled curve is acute, such as angled curve 114, the increased cross-sectional thickness of the spray tube apparatus housing, or more particularly, the portion 82 of fluid conduit member 80 accommodates such an angled curve. Thus, a fluid spray tube apparatus has been formed of a minimal number of parts comprising clamp member 95, valve seal ball 70, valve biasing member spring 72 and monolithic tube 55 formed into spray tube apparatus housing 52 defining a fluid receiving aperture 60, a valve chamber 62, 64, 76, fluid conduit member 80, 82, 84 and a fluid release aperture 110.

In use, such as to deliver a lubricating or cooling fluid from a sump of such fluid to the surface of an object to be lubricated or cooled, fluid receiving aperture 60 and valve chamber 64 are inserted into an opening provided in the sump and the fluid spray apparatus is secured to the sump by means of clamp member 95 being bolted to the surface of the sump by a bolt (not shown) or other suitable fastener passing through attachment aperture 96. It will be apparent to those skilled in the art that some other structure, such as a mounting post (not shown) could be substituted for aperture 96 and a bolt.

Automotive engine fluid spray tube apparatus housing 52 may be secured to a sump of a lubricating or cooling fluid in other ways apparent to those skilled in the art. Thus, for example, an extended portion of fluid spray tube apparatus housing 50, projecting beyond fluid receiving aperture 60, or valve body 64 itself, could be formed with an external male thread (not shown) which would cooperate with a threaded portion of an opening in the sump to threadably receive and secure the fluid spray tube apparatus housing.

The foregoing description and drawings merely explain and illustrate the invention and the invention is not limited thereto, except insofar as the appended claims are so limited, as those skilled in the art who have the disclosure before them will be able to make modifications and variations therein without departing from the scope of the invention.

## Claims

1. An automotive engine fluid spray tube apparatus for transferring a fluid, from a fluid source to a fluid release location, said fluid spray tube apparatus comprising:
a fluid spray tube apparatus housing describing a first, proximal fluid entry end and a second, distal fluid release end substantially opposite said first, fluid entry end;
a fluid receiving aperture at said proximal end of said apparatus for sealable attachment to, and receipt of said fluid from, said fluid source;
a valve chamber operably positioned within said apparatus housing,
said valve chamber within said apparatus housing including a fluid seal and a biasing member operably bearing against said fluid seal for controlling the flow of said fluid in a direction extending from said first proximal end to said second distal end;
a fluid conduit member operably and sealably attached to one side of said valve chamber for directing the flow of said fluid from said first fluid entry end to said second, distal fluid release end;
- a fluid release aperture at said distal end of said apparatus for the positioned release of said fluid from said apparatus; and
- each of said fluid spray tube apparatus housing, fluid receiving aperture, valve chamber, fluid conduit member and fluid release aperture, operably and collectively integrated into a single, substantially continuous, sealed monolithic tube structure to promote the continuous flow of said fluid conducted therewithin, while precluding the inadvertent, premature leakage of said fluid from said structure.

2. The invention according to claim 1 in which the automotive engine fluid spray tube apparatus further includes an attachment member positioned about the fluid spray tube apparatus housing for restrainably positioning the apparatus in position between said fluid source and said fluid release location.

3. The invention according to claim 2 in which said attachment member comprises:
a faceted region positioned about at least a portion of said fluid spray tube apparatus housing; and
said attachment member further including a clamp member possessing an equivalently faceted aperture for fixed telescopic receipt of said faceted portion of the apparatus housing by the faceted aperture of said clamp member.

4. The invention according to claim 3 in which:
said attachment member further includes an integrated beaded flange operably positioned into the circumference of said apparatus housing, substantially adjacent said faceted region;
said clamp member further including a beaded flange cavity having a shape equivalent to that of the beaded flange for telescopic restrainable receipt of the beaded flange by said cavity;
said beaded flange and said faceted attachment member serve to restrainably affix the orientation of said tube apparatus relative to said clamp member; and
said clamp member further including clamp attachment means for securing both the clamp member and the fluid spray tube apparatus in a fixed desired position relative to both said fluid source and said fluid release locations.

5. The invention according to claim 1 in which the fluid spray tube apparatus housing includes at least one angled curve positioned along its length.

6. The invention according to claim 5 in which the cross-sectional thickness of said fluid spray tube apparatus is enhanced to accommodate said at least one angled curve.

7. The invention according to claim 1 in which:
said valve chamber is located between two successive crimp regions within the fluid spray tube apparatus housing;
one side of said fluid seal cooperates with one of said successive crimp regions to seal the apparatus against the flow of fluid back through the fluid entry end, and
said fluid biasing member cooperates with the other side of said fluid seal and said second of said successive crimp regions to bear against the fluid seal to in turn ensure against inadvertent misdirectional fluid flow.

8. The invention according to claim 7 in which:
said fluid seal comprises a substantially spherical ball;
said basing member comprises a substantially coiled spring member; and
each of said fluid seal and biasing member are positioned between said two successive crimp regions in said fluid spray tube apparatus.

9. The invention according to claim 1 in which at least a first portion of the interior of said fluid spray tube apparatus is configured with the diameter substantially different from the diameter of a second portion immediately adjacent same, so as to affect, as desired, the flow of said fluid therethrough said fluid spray tube apparatus.

10. The invention according to claim 9 in which said first portion of said fluid spray tube apparatus is substantially larger in diameter than the diameter of said second portion.

11. The invention according to claim 9 in which said second portion of said fluid spray tube apparatus is substantially larger in diameter than the diameter of said first portion.

12. The invention according to claim 1 in which said single, substantially continuous sealed monolithic tube structure is formed of a metallic material.

13. The invention according to claim 1 in which said single, substantially continuous sealed monolithic tube structure is substantially cylindrical in shape.

14. A process for manufacturing an automotive engine fluid spray tube apparatus for transferring an automotive engine fluid from a fluid source to a fluid release location, said process comprising the steps of:
providing a single, substantially continuous sealed monolithic tube structure having a first, proximal fluid entry end and a second, distal fluid release end substantially opposite said first, fluid entry end;
forming a first crimp region in said tube structure at a position between said entry end and said release end;
positioning at least one of a fluid seal and a biasing member in an operable position substantially adjacent to said first crimp region on a first side; and
forming a second crimp region in said tube structure substantially adjacent and on a second opposite side of at least one of said fluid seal and biasing member, to create a valve chamber region operably occupied by said fluid seal and biasing member in positions restrained between said first and second crimp regions.

15. The method according to claim 14 in which:
said fluid seal comprises a substantially spherical ball, said spherical ball bearing against said first crimp region; and
said biasing member comprises a compressible coil spring bearing against said spherical ball on one side of said spring, and bearing against said second crimp region on the second, opposite side of said spring.

16. The method according to claim 14 in which the process for manufacturing an automotive engine fluid spray tube apparatus for transferring an automotive fluid from said fluid source to a fluid release location further comprises the step of outwardly flaring the tube structure substantially adjacent said second crimp region at a position downstream from said valve chamber.

17. The method according to claim 16 in which the process for manufacturing an automotive engine fluid spray tube apparatus for transferring an automotive engine fluid from said fluid source to a fluid release location further comprises the step of beading the tube structure substantially adjacent said second crimp region, at a position downstream from said valve chamber, to form an annular flange about said tube structure.

18. The method according to claim 17 in which the process for manufacturing an automotive engine fluid spray tube apparatus for transferring an automotive engine fluid from said fluid source to a fluid release location further comprises the further step of faceting the tube structure immediately adjacent said beaded, flanged region downstream of the valve chamber, to enable cooperative receipt of both said beaded, flanged region and said faceted region in restrained fashion by a clamp member.

19. The method according to claim 18 in which said faceted region is shaped to assume a substantially hexagonal surface about said tube structure.

20. The method according to claim 18 in which the process for manufacturing an automotive engine fluid spray tube apparatus for transferring an automotive engine fluid from said fluid source to a fluid release location further comprises the step of affixing said tube structure to said clamp member, at said beaded, flanged region and said faceted region.

21. The method according to claim 14 in which the process for manufacturing an automotive engine fluid spray tube apparatus for transferring an automotive engine fluid from said fluid source to a fluid release location further comprises the step of enlarging the internal diameter of said tube structure downstream of said valve chamber, towards said release end.

22. The method according to claim 21 in which the process for manufacturing an automotive engine fluid spray tube apparatus for transferring an automotive engine fluid from said fluid source to a fluid release location further comprises the step of reducing the internal diameter of said tube structure at the release end of said apparatus.

23. The method according to claim 14 in which the process for manufacturing an automotive engine fluid spray tube apparatus for transferring an automotive engine fluid from said fluid source to a fluid release location further comprises the step of positioning said valve chamber substantially proximate to said first, proximal fluid entry end.
